# EUROPÄISCHE PATENTSCHRIFT

(11) **EP 3 322 585 B1**
(45) Veröffentlichungstag und Bekanntmachung des Hinweises auf die Patenterteilung: **10.03.2021**
(21) Anmeldenummer: 16711664.9
(22) Anmeldetag: 24.03.2016
(51) Int. Cl.: B29D 30/06, B29C 33/10

(54) **VULKANISIERFORM FÜR FAHRZEUGREIFEN MIT ENTLÜFTUNGSMITTELN**
VULCANIZING MOLD FOR VEHICLE TIRES HAVING VENTING MEANS
MOULE DE VULCANISATION POUR PNEUMATIQUES DE VÉHICULE, MUNI DE MOYENS D'AÉRATION

(30) Priorität: 13.07.2015 DE 102015213027
(43) Veröffentlichungstag der Anmeldung: 23.05.2018
(73) Patentinhaber: Continental Reifen Deutschland GmbH, 30165 Hannover (DE)
(72) Erfinder: CIPTOKUSUMO, Joharsyah, 30165 Hannover (DE); HASSELLÖF, Magnus, 30966 Hemmingen (DE); WENZEL, Karsten, 31691 Helpsen (DE); DZICK, Jürgen, 30926 Seelze (DE)
(74) Vertreter: Continental Corporation
(86) Internationale Anmeldenummer: PCT/EP2016/056573
(87) Internationale Veröffentlichungsnummer: WO 2017/008925

(56) Entgegenhaltungen:
- EP-A1- 2 524 787
- DE-C1- 19 543 276
- JP-A- S6 297 807
- JP-A- 2005 028 589
- JP-A- 2006 159 597
- JP-A- 2010 143 043
- JP-A- 2014 058 046
- US-A1- 2009 261 509

## Beschreibung

Die Erfindung betrifft eine Vulkanisierform für Fahrzeugreifen, welche aus Formsegmenten mit innenseitigen Formflächen besteht, wobei die Formsegmente radial angeordnete Entlüftungsmittel mit zylindrischen Entlüftungskanälen aufweisen, wobei in dem Entlüftungskanal ein coaxialer, auswechselbarer, federgelagerter Stift mit einem dem Formenhohlraum zugewandten Dichtteller angeordnet ist, wobei der Stift mit Federkraft die Ausleitung der Luft aus dem Formenhohlraum durch einen Ringspalt zwischen Dichttellerrand und Entlüftungskanalwandung erlaubt und wobei der Stift beim Einformen des Reifens durch den Druck des Reifens auf den Dichtteller entgegen der Kraft der Feder das Entlüftungsmittel durch Schließen des Ringspaltens zwischen Dichttellerrand und Entlüftungskanalwandung weitestgehend luftdicht verschließt.

Es ist bekannt, Entlüftungsmittel in Vulkanisierformen vorzusehen, um die beim Einformen des Reifenrohlings in die Vulkanisierform zwischen dem Reifenrohling und den Formflächen verbleibende Luft abführen zu können. Hierdurch sollen unerwünschte Fehlstellen in Form von Unebenheiten an der Oberfläche des Reifens vermieden werden. Während des Vulkanisiervorganges bekommt der Reifenrohling seine endgültige Kontur und wird durch Kautschukvernetzungsreaktionen in seinen gummielastischen Zustand überführt.

Es ist bekannt, dass beim Ausvulkanisieren des Fahrzeugreifens Kautschukmaterial in als Entlüftungsmittel dienende zylindrische Entlüftungskanäle gepresst bzw. gesogen werden kann. Die dadurch auf dem fertigen Fahrzeugreifen entstehenden unerwünschten Austriebe müssen vor dessen Verwendung mit eigens dafür vorgesehenen Maschinen entfernt werden. Dieses sogenannte "Trimmen" führt zu einer Verlängerung und Verteuerung des Herstellungsprozesses des Fahrzeugreifens.

Um dieses Trimmen zu vermeiden, ist es bekannt, in der Formfläche der Vulkanisierform mündende Entlüftungskanäle durch gebohrte Ausnehmungen zu bilden, in welche bewegliche Ventilstifte eingesetzt sind, welche den Entlüftungskanal nach der Luftausleitung verschließen und somit die unerwünschten Austriebe weitestgehend vermeiden. Derartige verschließbare Entlüftungsventile des Oberbegriffs sind in der DE 195 43 276 A1 offenbart und finden beispielsweise als sogenannte "Eurovents" Verwendung. Ein Eurovent weist in einer bestimmten Ausführungsform eine aus Metall gefertigte Hülse auf, in welcher zur Abdichtung des Formenhohlraums ein entgegen der Kraft einer Feder verschließbarer Ventilteller an einem Schaft (zusammen als "Stift" bezeichnet) angeordnet ist, welcher das Hülsenende in der Ebene der Formfläche nach Luftausleitung verschließt. Dieses Ventil vermeidet die Austriebe, da der Ventilteller das Entlüftungsmittel mit der Formfläche fluchtend komplett verschließt und kein Kautschukmaterial in den Entlüftungskanal eindringen kann. Nachteilig ist jedoch, dass viele Eurovents in der Vulkanisierform benötigt werden. Moderne Winterreifenformen weisen für eine ausreichende Entlüftung bis zu 5000 solcher Eurovents auf. Zudem ist das Eurovent verschmutzungsanfällig, weil beispielsweise unter den Tellerrand gelangendes Kautschukmaterial das Ventil verschmutzt, verklebt und unbrauchbar macht. Dieser nachteilige Effekt kann durch moderne Kautschukmischungen, die alternative Weichmacher enthalten, noch verstärkt werden.

Das Einbringen dieser hohen Anzahl an Eurovents in die Vulkanisierform sowie die Reinigung bzw. der Austausch der verschmutzten Ventile führt zu einem erheblichen Kosten- und Zeitaufwand.

Es ist die Aufgabe der vorliegenden Erfindung, eine Vulkanisierform für Fahrzeugreifen bereitzustellen, welche mit einer geringeren Anzahl an Ventilen auskommt und mit welcher dennoch optisch hochqualitative Fahrzeugreifen zu vulkanisieren sind.

Diese Aufgabe wird gelöst, indem in dem Dichtteller ein zusätzlicher, nicht verschließbarer Entlüftungsschlitz angeordnet ist, durch welchen eine Entlüftung des Formenhohlraumes auch in geschlossenem Zustand des Ringspaltes zwischen Dichtteller und Entlüftungskanal ermöglicht ist.

Hierdurch ist ein Entlüftungsmittel für eine erfindungsgemäße Vulkanisierform geschaffen, das zuverlässig Luft aus dem Formenhohlraum über zwei Luftableitwege je Entlüftungsmittel abführt: einerseits über den Ringspaltes zwischen Dichtteller und Entlüftungskanal und andererseits über den nicht verschließbaren zusätzlichen Entlüftungsschlitz. Beide Luftführwege nutzen im weiteren Verlauf (nach dem Dichtteller) einen gemeinsamen Kanal, durch welchen die Luft weiter nach radial außen abgeführt wird.

Durch diese zweifache Luftableitung pro Entlüftungsmittel kann mehr Luft pro Zeiteinheit aus dem Formenhohlraum nach radial außen abgeleitet werden. Somit kann die Anzahl der Entlüftungsmittel pro Vulkanisierform verringert werden. Das optische Erscheinungsbild des vulkanisierenden Reifens ist weiterhin hochqualitativ.

Der Entlüftungskanal kann erfindungsgemäß auch mit einer Hülse oder ähnlichem ausgekleidet sein, in welcher der Stift dann austauschbar angeordnet ist.

Zweckmäßig ist es, wenn die radiale Erstreckung des Entlüftungsschlitzes zumindest die radiale Erstreckung des Dichttellers vollständig durchläuft. Hierdurch ist eine zuverlässige Entlüftung über die Entlüftungsschlitze in den Entlüftungskanal gewährleistet.

Vorteilhaft ist es, wenn der Entlüftungsschlitz eine Schlitzbreite von 50 µm bis 100 µm aufweist. Derartige "Mikroschlitze" sind mit neuartigen Verfahren wie beispielsweise dem Water-Laser-Verfahren, herstellbar. Diese Schlitze weisen eine derart geringe Breite auf, dass Luft aus dem Formenhohlraum zuverlässig ableitbar ist, jedoch Kautschukmaterial nicht in die Schlitze eingesogen bzw. -gepresst werden kann. Das Entlüftungsmittel verstopft nicht oder kaum und ist über einen langen Zeitraum einsetzbar. Am Reifen entstehen kauf Austriebe.

In einer bestimmten Ausführung der Erfindung sind ein bis vier Entlüftungsschlitze angeordnet.

Vorteilhafterweise sind zwei bis vier Entlüftungsschlitze angeordnet, welche - in Aufsicht auf den Ventilteller - den Ventilteller dessen Mittelpunkt vollständig queren und vorzugsweise in Form eines Kreuzes oder eines Sternes angeordnet sind. Diese Schlitzanordnung ist einfach und kostengünstig zu fertigen und ist zudem effizient in der Entlüftung.

In einer anderen Ausführung der Erfindung sind zwei bis acht Entlüftungsschlitze angeordnet, welche - in Aufsicht auf den Ventilteller - den Ventilteller nicht vollständig queren, sondern vorzugsweise randlich angeordnet sind.

In einer wiederum anderen Ausführung der Erfindung ist der Entlüftungsschlitz randlich angeordnet, so dass der Ventilteller in Aufsicht eine mit mindestens einer Anfräsung runde Form aufweist.
Die Breite bemisst sich dann an der schmalsten Stelle des Entlüftungsschlitzes.

Zweckmäßig ist es, wenn der Stift mittels eines Schnappverschlusses in dem Entlüftungskanal austauschbar angeordnet ist. Hierdurch kann der Ventilstift einfach und kostengünstig angeordnet, aber auch einfach ausgetauscht werden.

Weitere Merkmale, Vorteile und Einzelheiten der Erfindung werden anhand der Zeichnungen, die schematische Ausführungsbeispiele darstellen, näher erläutert. Es zeigen die:
Fig. 1 eine segmentierte Vulkanisierform mit Formsegmenten;
Fig. 2a und 2b Längsschnitte durch einen federgelagerten Stift mit Entlüftungskanal, wobei beide Längsschnitte 90° zueinander geschnitten sind;
Fig. 3a und 3b einen Längsschnitt eines anderen Stiftes für das Entlüftungsmittel für die vorgenannte Vulkanisierform, wobei beide Längsschnitte 90° zueinander geschnitten sind.

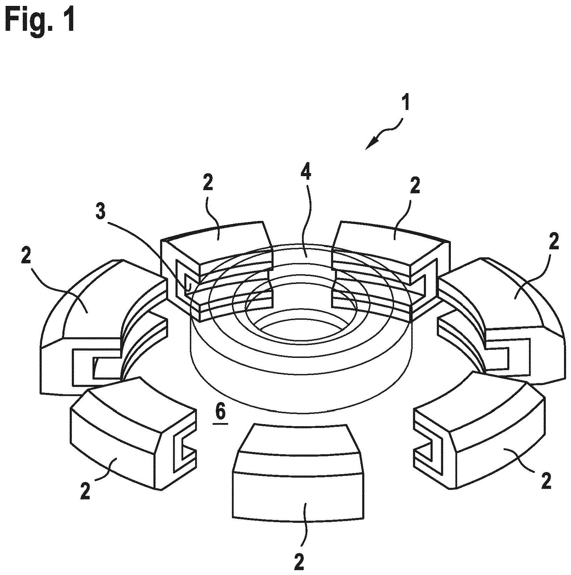

In der **Fig.1** ist eine vereinfachte schematische Darstellung einer segmentierten Vulkanisierform 1 für Fahrzeugreifen 4 mit mehreren, zu einer umfangsmäßig geschlossenen Form zusammenfügbaren Formsegmenten 2 dargestellt. Die Formsegmente 2 sind radial verfahrbar und bilden radial innen einen Formenhohlraum 5. Die Formsegmente 2 weisen innenseitig Formflächen 3 auf. Die Formsegmente 2 weisen weiterhin Entlüftungsmittel (nicht dargestellt) mit zylindrischen Entlüftungskanälen (nicht dargestellt) auf, welche mit der Atmosphäre in Verbindung stehen und durch welche Gas aus dem Formenhohlraum 5 der Vulkanisierform 1 durch das Formsegment 2 hindurch nach außen ausleitbar ist.

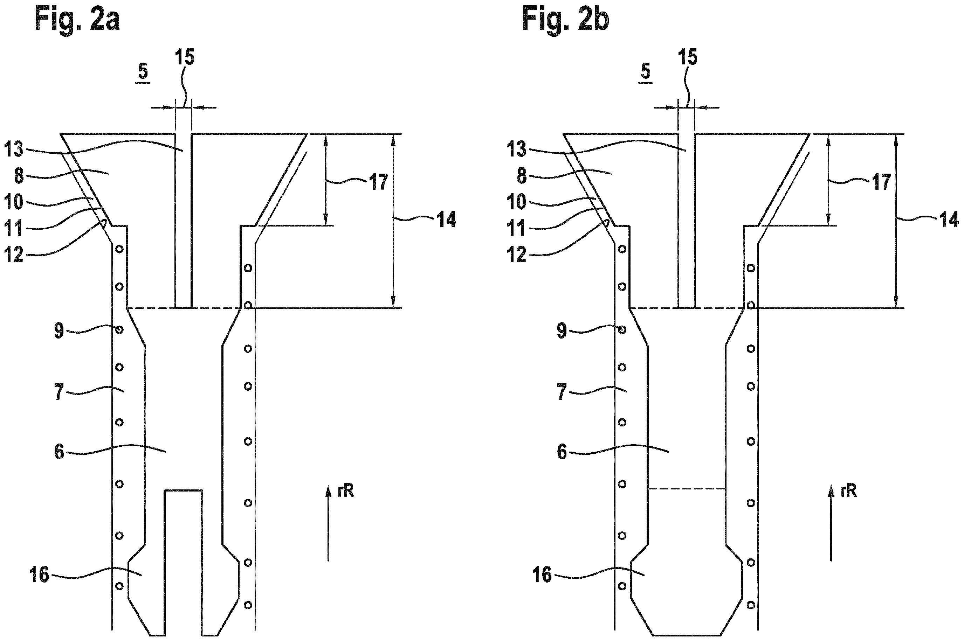

Die **Fig. 2a** zeigt einen Längsschnitt eines federgelagerten Stiftes 6 in einem Entlüftungskanal 7 für die vorgenannte Vulkanisierform 1, während die Fig. 2b einen Längsschnitt des gleichen Stiftes 6 zeigt, wobei der Längsschnitt der Fig. 2b senkrecht auf dem Längsschnitt der Fig. 2a steht. Der Entlüftungskanal 7 kann beispielsweise auch mit einer Hülse ausgekleidet sein (hier nicht dargestellt).

In dem Entlüftungskanal 7 ist ein coaxialer, auswechselbarer, federgelagerter Stift 6 mit einem dem Formenhohlraum 5 zugewandten Dichtteller 8 angeordnet ist. Der Stift 6 erlaubt mit Federkraft die Ausleitung der Luft aus dem Formenhohlraum 5 durch einen Ringspalt 10 zwischen Dichttellerrand 11 und gegengleicher Entlüftungskanalwandung 12. Beim Einformen des Reifens wird der Stift 6 durch den Druck des Reifens auf den Dichtteller 8 entgegen der Kraft der Feder niedergedrückt, wodurch der Ringspalt 10 zwischen Dichttellerrand 11 und der gegengleich geformten Entlüftungskanalwandung 12 geschlossen wird. In dem Dichtteller 8 ist ein zusätzlicher, nicht verschließbaren Entlüftungsschlitz 13 angeordnet, durch den eine Entlüftung des Formenhohlraumes 5 auch in geschlossenem Zustand des Ringspaltes 10 zwischen Dichttellerrand 11 und Entlüftungskanalwandung 12 ermöglicht ist.

Die radiale Erstreckung 14 des Entlüftungsschlitzes 13 durchläuft zumindest die radiale Erstreckung 14 des Dichttellers 8 vollständig und beträgt hier 1,75 mm. Der Entlüftungsschlitz 13 weist eine Schlitzbreite 15 von 50 µm bis 100 µm auf. Hier sind zwei gleichbreite und die gleiche radiale Erstreckung aufweisende Entlüftungsschlitze 13 in Form eines Kreuzschlitzes angeordnet. Die zwei Entlüftungsschlitze 13 queren den Dichtteller 8 durch dessen Mittelpunkt vollständig und sind in Form eines Kreuzes angeordnet.

Der Stift 6 weist an seinem unteren Ende, dem Formenhohlraum 5 abgewandten Ende, einen Schnappverschluss 16 auf, der in gegengleiche Abschnitte (nicht dargestellt) des Entlüftungskanals 7 einrastbar ist und mittels dessen dieser in dem Entlüftungskanal 7 austauschbar angeordnet ist.

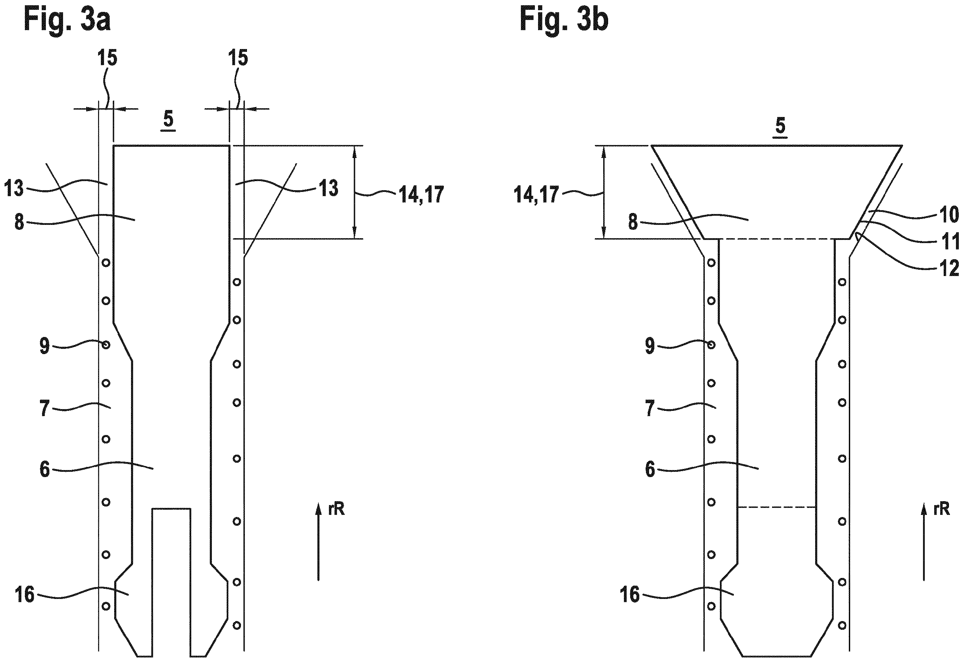

Die **Fig. 3a und 3b** zeigen Längsschnitte eines anderen Stiftes 6 für die vorgenannte Vulkanisierform. Die Stifte 6 der Fig. 3a und 3b unterscheiden sich von den Stiften 7 der Fig. 2a, 2b darin, dass zwei Entlüftungsschlitze 13 randlich am Dichtteller 8 angeordnet sind, so dass der Dichtteller 8 in Aufsicht eine mit zwei Anfräsungen runde Form aufweist.

### Bezugszeichenliste

### (Teil der Beschreibung)

- 1: Vulkanisierform
- 2: Formsegment
- 3: Formfläche
- 4: Reifen
- 5: Formenhohlraum
- 6: Stift
- 7: Entlüftungskanal
- 8: Dichtteller
- 9: Feder
- 10: Ringspalt
- 11: Dichttellerrand
- 12: Entlüftungskanalwandung
- 13: Entlüftungsschlitz
- 14: Radiale Erstreckung des Entlüftungsschlitzes
- 15: Breite des Entlüftungsschlitzes
- 16: Schnappverschluß
- 17: Radiale Erstreckung des Dichttellers

- rR: radiale Richtung

## Patentansprüche

1. Vulkanisierform (1) für Fahrzeugreifen, welche aus Formsegmenten (2) mit innenseitigen Formflächen (3) besteht, wobei die Formsegmente (2) radial angeordnete Entlüftungsmittel mit zylindrischen Entlüftungskanälen (7) aufweisen, wobei in dem Entlüftungskanal (7) ein coaxialer, auswechselbarer, federgelagerter und beweglicher Stift (6) mit einem dem Formenhohlraum (5) zugewandten Dichtteller (8) angeordnet ist, wobei der Stift (6) mit Federkraft die Ausleitung der Luft aus dem Formenhohlraum (5) durch einen Ringspalt (10) zwischen Dichttellerrand (11) und Entlüftungskanalwandung (12) erlaubt und wobei der Stift (6) dazu ausgebildet ist beim Einformen des Reifens durch den Druck des Reifens auf den Dichtteller (8) entgegen der Kraft der Feder (9) das Entlüftungsmittel durch Schließen des Ringspaltes (10) zwischen Dichttellerrand (11) und Entlüftungskanalwandung (12) weitestgehend luftdicht zu verschließen,
**dadurch gekennzeichnet, dass** in dem Dichtteller (8) ein zusätzlicher, nicht verschließbaren Entlüftungsschlitz (13) angeordnet ist, durch den eine Entlüftung des Formenhohlraumes (5) auch in geschlossenem Zustand des Ringspaltes (10) zwischen Dichttellerrand (11) und Entlüftungskanalwandung (12) ermöglicht ist.

2. Vulkanisierform (1) nach Anspruch 1, **dadurch gekennzeichnet, dass** die radiale Erstreckung (14) des Entlüftungsschlitzes (13) zumindest die radiale Erstreckung des Dichttellers (17) vollständig durchläuft.

3. Vulkanisierform (1) nach Anspruch 1 oder 2, **dadurch gekennzeichnet, dass** der Entlüftungsschlitz (13) in Aufsicht auf den Dichtteller (8) eine Schlitzbreite (15) von 50 µm bis 100 µm aufweist.

4. Vulkanisierform (1) nach einem oder mehreren der vorangehenden Ansprüche 1 bis 3, **dadurch gekennzeichnet, dass** ein bis vier Entlüftungsschlitze (13) angeordnet sind.

5. Vulkanisierform (1) nach einem oder mehreren der vorangehenden Ansprüche 1 bis 4, **dadurch gekennzeichnet, dass** zwei bis vier Entlüftungsschlitze (13) angeordnet sind, welche - in Aufsicht auf den Dichtteller (8) - den Dichtteller (8) durch dessen Mittelpunkt vollständig queren und vorzugsweise in Form eines Kreuzes oder eines Sternes angeordnet sind.

6. Vulkanisierform (1) nach einem oder mehreren der vorangehenden Ansprüche 1 bis 4, **dadurch gekennzeichnet, dass** zwei bis acht Entlüftungsschlitze (13) angeordnet sind, welche - in Aufsicht auf den Dichtteller (8) - den Dichtteller (8) nicht durch dessen Mittelpunkt vollständig queren, sondern vorzugsweise randlich angeordnet sind.

7. Vulkanisierform (1) nach einem oder mehreren der vorangehenden Ansprüche, **dadurch gekennzeichnet, dass** der Entlüftungsschlitz (13) randlich angeordnet ist, so dass der Dichtteller (8) in Aufsicht eine mit mindestens einer Anfräsung runde Form aufweist.

## Claims

1. Vulcanizing mould (1) for vehicle tyres, which consists of mould segments (2) with inner mould surfaces (3), wherein the mould segments (2) have radially arranged venting means with cylindrical venting channels (7), wherein a coaxial, exchangeable, spring-mounted and movable pin (6) with a sealing plate (8) facing the mould cavity (5) is arranged in the venting channel (7), wherein the pin (6) allows the air to be removed from the mould cavity (5) through an annular gap (10) between the sealing-plate edge (11) and the venting-channel wall (12) by means of spring force and wherein the pin (6) is designed to close the venting means in a largely airtight manner during the moulding of the tyre by closing the annular gap (10) between the sealing-plate edge (11) and venting-channel wall (12) as a result of the pressure of the tyre on the sealing plate (8) against the force of the spring (9), **characterized in that** arranged in the sealing plate (8) is an additional, non-closable venting slit (13), through which venting of the mould cavity (5) is made possible even in the closed state of the annular gap (10) between the sealing-plate edge (11) and the venting-channel wall (12).

2. Vulcanizing mould (1) according to Claim 1, **characterized in that** the radial extent (14) of the venting slit (13) completely covers at least the radial extent of the sealing plate (17).

3. Vulcanizing mould (1) according to Claim 1 or 2, **characterized in that** the venting slit (13) has in plan view of the sealing plate (8) a slit width (15) of 50 µm to 100 µm.

4. Vulcanizing mould (1) according to one or more of the preceding Claims 1 to 3, **characterized in that** one to four venting slits (13) are arranged.

5. Vulcanizing mould (1) according to one or more of the preceding Claims 1 to 4, **characterized in that** two to four venting slits (13) are arranged, which - in plan view of the sealing plate (8) - completely traverse the sealing plate (8) at its centre point and are preferably arranged in the form of a cross or a star.

6. Vulcanizing mould (1) according to one or more of the preceding Claims 1 to 4, **characterized in that** two to eight venting slits (13) are arranged, which - in plan view of the sealing plate (8) - do not completely traverse the sealing plate (8) through its centre point, but are preferably arranged peripherally.

7. Vulcanizing mould (1) according to one or more of the preceding claims, **characterized in that** the venting slit (13) is arranged peripherally, so that the sealing plate (8) has in plan view a round shape with at least one milled recess.

## Revendications

1. Moule de vulcanisation (1) pour pneumatiques de véhicule, qui se compose de segments de moule (2) avec des surfaces de moule du côté intérieur (3), les segments de moule (2) présentant des moyens de désaérage disposés radialement avec des canaux de désaérage cylindriques (7), une goupille (6) coaxiale, remplaçable, supportée sur ressort et déplaçable étant disposée dans le canal de désaérage (7), avec une rondelle d'étanchéité (8) tournée vers la cavité du moule (5), la goupille (6) permettant, avec la force de ressort, l'évacuation de l'air hors de la cavité du moule (5) à travers une fente annulaire (10) entre le bord de la rondelle d'étanchéité (11) et la paroi du canal de désaérage (12) et la goupille (6) étant réalisée de manière à fermer essentiellement de manière étanche à l'air le moyen de désaérage lors de la formation du pneu par la pression du pneu sur la rondelle d'étanchéité (8) à l'encontre de la force du ressort (9), par fermeture de la fente annulaire (10) entre le bord de la rondelle d'étanchéité (11) et la paroi du canal de désaérage (12),
**caractérisé en ce qu'**une fente de désaérage supplémentaire non obturable (13) est disposée dans la rondelle d'étanchéité (8), par laquelle un désaérage de la cavité du moule (5) est également possible dans l'état fermé de la fente annulaire (10) entre le bord de la rondelle d'étanchéité (11) et la paroi du canal de désaérage (12).

2. Moule de vulcanisation (1) selon la revendication 1, **caractérisé en ce que** l'étendue radiale (14) de la fente de désaérage (13) traverse complètement au moins l'étendue radiale de la rondelle d'étanchéité (17).

3. Moule de vulcanisation (1) selon la revendication 1 ou 2, **caractérisé en ce que** la fente de désaérage (13), en vue de dessus sur la rondelle d'étanchéité (8), présente une largeur de fente (15) de 50 µm à 100 µm.

4. Moule de vulcanisation (1) selon l'une quelconque ou plusieurs des revendications précédentes 1 à 3, **caractérisé en ce qu'**il y a une à quatre fentes de désaérage (13).

5. Moule de vulcanisation (1) selon l'une quelconque ou plusieurs des revendications précédentes 1 à 4, **caractérisé en ce que** il y a deux à quatre fentes de désaérage (13) qui, en vue de dessus sur la rondelle d'étanchéité (8), traversent complètement la rondelle d'étanchéité (8) à travers son centre et sont de préférence disposées sous la forme d'une croix ou d'une étoile.

6. Moule de vulcanisation (1) selon l'une quelconque ou plusieurs des revendications précédentes 1 à 4, **caractérisé en ce qu'**il y a deux à huit fentes de désaérage (13) qui, en vue de dessus sur la rondelle d'étanchéité (8), traversent complètement la rondelle d'étanchéité (8), pas à travers son centre, mais sont de préférence disposées sur les bords.

7. Moule de vulcanisation (1) selon l'une quelconque ou plusieurs des revendications précédentes, **caractérisé en ce que** la fente de désaérage (13) est disposée au niveau du bord de telle sorte que la rondelle d'étanchéité (8) présente, en vue de dessus, une forme ronde avec au moins une fraisure.
